Europäisches Patentamt

European Patent Office

Office européen des brevets

(11) Publication number: **0 111 035**
**B1**

## EUROPEAN PATENT SPECIFICATION

(45) Date of publication of patent specification: **03.09.86**

(21) Application number: **82306467.0**

(22) Date of filing: **06.12.82**

(51) Int. Cl.⁴: **B 01 D 21/02,** B 01 D 21/24

(54) **Clarifier for removing solids from waste water.**

(43) Date of publication of application:
**20.06.84 Bulletin 84/25**

(45) Publication of the grant of the patent:
**03.09.86 Bulletin 86/36**

(84) Designated Contracting States:
**DE FR GB IT NL SE**

(56) References cited:
**FR-A-1 556 330**
**GB-A-2 075 856**
**US-A-2 673 451**
**US-A-4 328 101**
**US-A-4 360 427**

(73) Proprietor: **Beard, Harold James**
**P.O. Box 3838 11328 Pennywood Avenue**
**Baton Rouge Louisiana 70821 (US)**

(72) Inventor: **Beard, Harold James**
**P.O. Box 3838 11328 Pennywood Avenue**
**Baton Rouge Louisiana 70821 (US)**

(74) Representative: **MacGregor, Gordon et al**
**ERIC POTTER & CLARKSON 14 Oxford Street**
**Nottingham, NG1 5BP (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a process and apparatus for clarifying a waste water stream by removing solids from the stream.

In conventional waste water treatment processes a portion or all of the waste water is diverted to a settling pond or a flow channel. There the solids contained in the waste water are separated out by settling or chemical treatment. The purified water is then returned to the main waste water stream for final disposition.

The difficulty with the prior art processes is that they result in the addition of contaminating chemical or require extremely large settling ponds or clarifiers relative to the amount of waste water treated or treatment time is too long.

It is an object of this invention to provide a waste water clarifier which can more rapidly remove solids from a waste water stream can be relatively of reduced size and does not require the addition of chemicals to remove the solids. The use of scraping mechanisms is also unnecessary.

GB—A—2075856 discloses a process and apparatus which seek to avoid the necessity for use of scraping mechanisms. A clarifier is mounted in an oxidation ditch and has an inlet facing the waste water stream so that a portion of the stream enters the clarifier. Settlement occurs in the clarifier and the upper clear phase so formed is removed by a launder. Solids settle in the bottom of the clarifier, but the bottom is shaped to discourage build-up of deposited solids and direct them to openings through which the solids can return to the waste water stream.

The present invention provides a process and apparatus characterised respectively by the features of the characterising clauses of Claims 1 and 3 respectively.

Reference is now made to the accompanying drawings, wherein:—

Figure 1 is a top view of a waste water flow channel with a preferred embodiment of a clarifier positioned therein;

Figure 2 is a top view of the preferred clarifier structure of this invention;

Figure 3 is a longitudinal cross-sectional view of the clarifier of Figure 2;

Figure 4 is a lateral cross-sectional view of the clarifier of Figure 2;

Figure 5 is a top view of a waste water flow channel with an alternative embodiment of the clarifier positioned therein;

Figure 6 is a cross-sectional view taken along lines IV—IV of Figure 5; and

Figure 7 is a cross-sectional view taken along lines III—III of Figure 5.

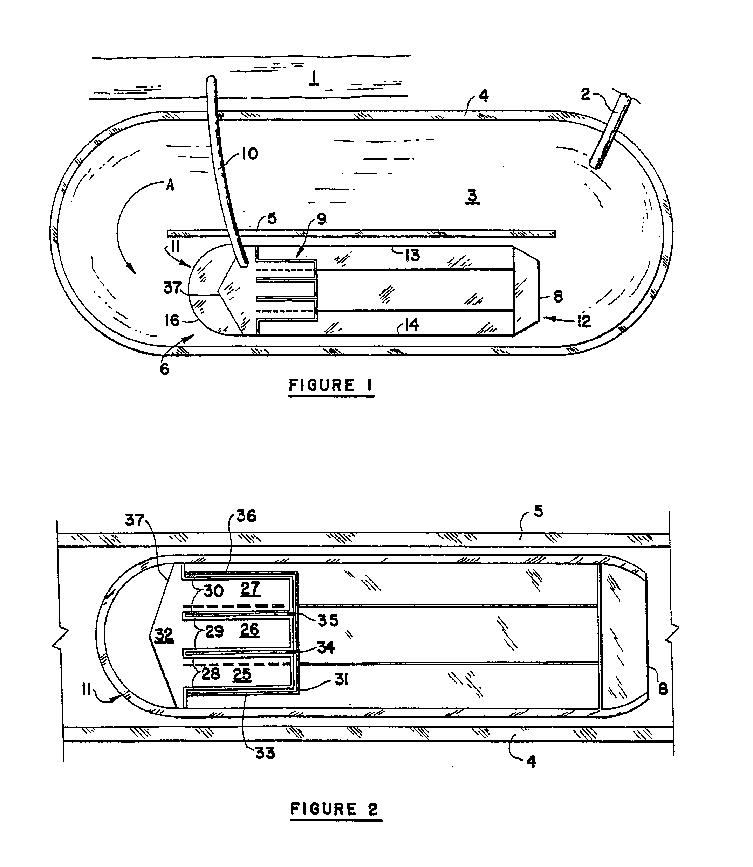

In a waste water treatment process according to this invention as seen in Figure 1 and 2, at least a portion of the waste water is removed from a waste water source 1 by conduit 2 which is provided with conventional screens for removal of large solid materials such as branches, etc. The waste water containing principally suspended solids is then dumped into a waste water channel 3 formed by concrete walls 4 and 5. Within channel 3 the waste water is directed to flow in the directions indicated by the arrows A. As the water flows past the clarifier, denoted generally by the numeral 6, a portion flows back into clarifier 6 through opening 7 of rear clarifier wall 8, where the waste water is separated into a solid stream and clarified water stream. The clarified water stream is directed into effluent launder 9 where it is either pumped or flows by gravity through return conduit 10 back to water stream 1.

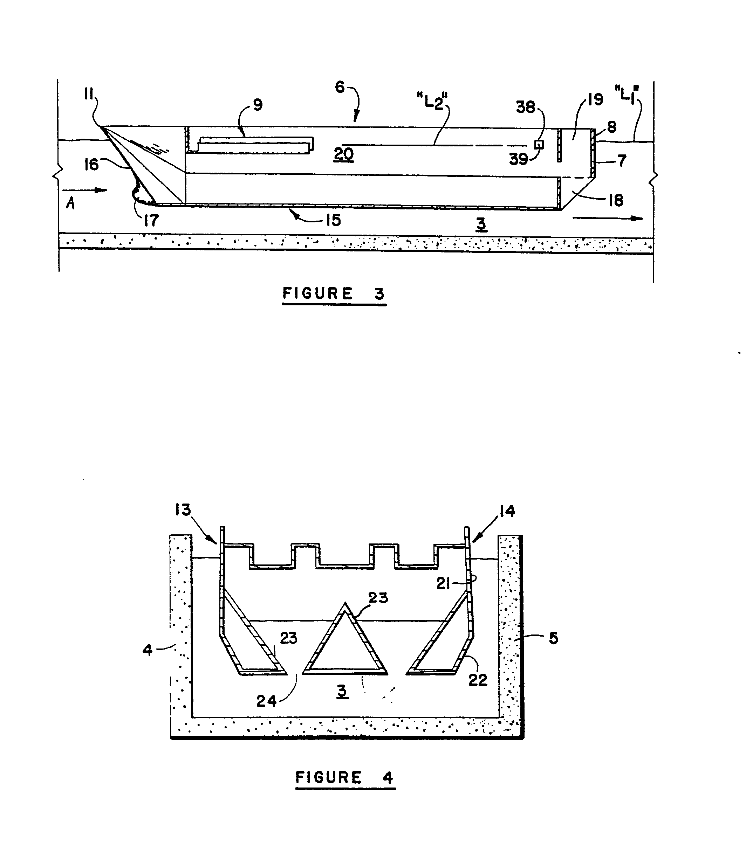

Referring now to Figures 2 to 4, a particularly preferred embodiment of clairifier 6 is illustrated comprising, in general, a bow or front section 11, a stern or rear section 12, side walls 13 and 14 and keel or bottom panel 15 attached to one another in a boat-like shape as shown. In a preferred embodiment, side walls 13 and 14 are positioned a distance away from concrete walls 4 and 5 to avoid any damming problems.

Front section 11 is constructed from an arcuately-shaped bow wall 16 sloped inward from the top, and in one preferred embodiment to bulb-shaped protrusion 17 used to stabilize clarifier 6.

Rear section 12 comprises a panel 8 having opening 7 positioned below the channel waste water level "$L_1$" to allow the waste water from channel 3 to flow into clarifier rear chamber 19 where it will eventually rise to level "$L_2$" in middle chamber 20 as shown.

The front section 11 and rear section 12 are attached by side walls 13 and 14 which, in a preferred embodiment, are each constructed from an upper flat section 21 and a lower flat section 22 angled outward along their line of attachment. In this manner, less turbulence is created in the waste water as it flows past clarifier 6.

The keel or bottom panel 15 is constructed from parallel rows of hollow tubes 23, preferably rhombus-shaped, which, depending on their orientation, are fixed in position by attaching to side walls 13 and 14 and, in the alternative, the front and rear sections 11 and 12. Tubes 23 are separated from one another to create slot ports 24 through which solids being settled out of the waste water can re-enter waste water channel 3. Positioned in top of clarifier 6 at front section 11 is effluent launder 9 which is constructed with multiple troughs 25, 26 and 27, whose sides 28, 29 and 30, respectively, and back side 31 extend upward to level slightly below level "$L_2$" to allow the clarified water from forward clarifier chamber 32 to enter the troughs. In another preferred embodiment, side baffles 33, 34, 35 and 36 are positioned along side troughs 25, 26 and 27 as shown with a front baffle 37 positioned in front of troughs 25, 26 and 27 and all of which extend above "$L_2$".

In another preferred embodiment, screened side wall parts 38, having adjustable openings 39, are positioned so that any floating solids can be removed from clarifier chambers 19 and 20 by conventional means.

In operation, clarifier 6 is placed in channel 3 so that front section 11 faces into the waste water current. Because clarifier 6 restricts the waste water flow, the velocity of the waste water is increased as it passes clarifier 6. In this regard, it is preferred that clarifier 6 be positioned near channel bottom 53 to increase the waste water velocity past clarifier 6. It is also preferred that clarifier 6 be anchored in position by any conventional means. This increased velocity results in waste water entering clarifier chamber 19 through rear clarified wall opening 7. The waste water entering rear section 12 flows toward front section 11. Since this flow is at a substantially reduced velocity, solids suspended in the waste water settle toward tubes 23 and are removed through slot ports 24. This results in a clarified waste water phase at the upper portion of clarifier chambers 19 and 20. This clarified phase is allowed to enter troughs 25, 26 and 27, where it is removed by conduit 10 and discharged to the water stream 1. It has been found that by using the clarifier configuration disclosed, the turbulence of the waste water flowing past clarifier 6 and turbulence of the waste water in clarifier chambers 19 and 20 have been minimized, resulting in more rapid and efficient removal of solids from the waste water.

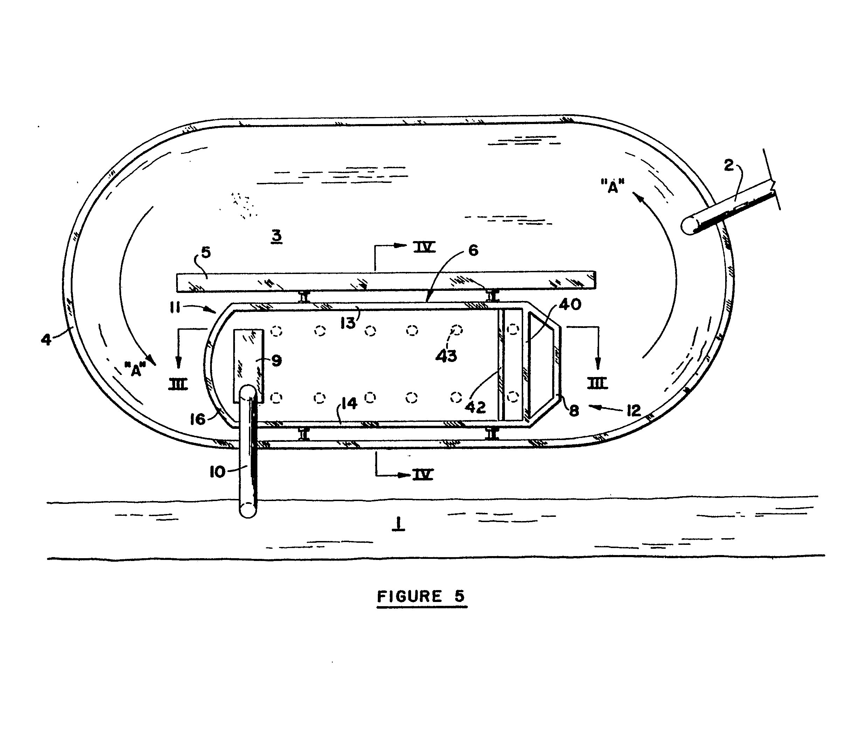

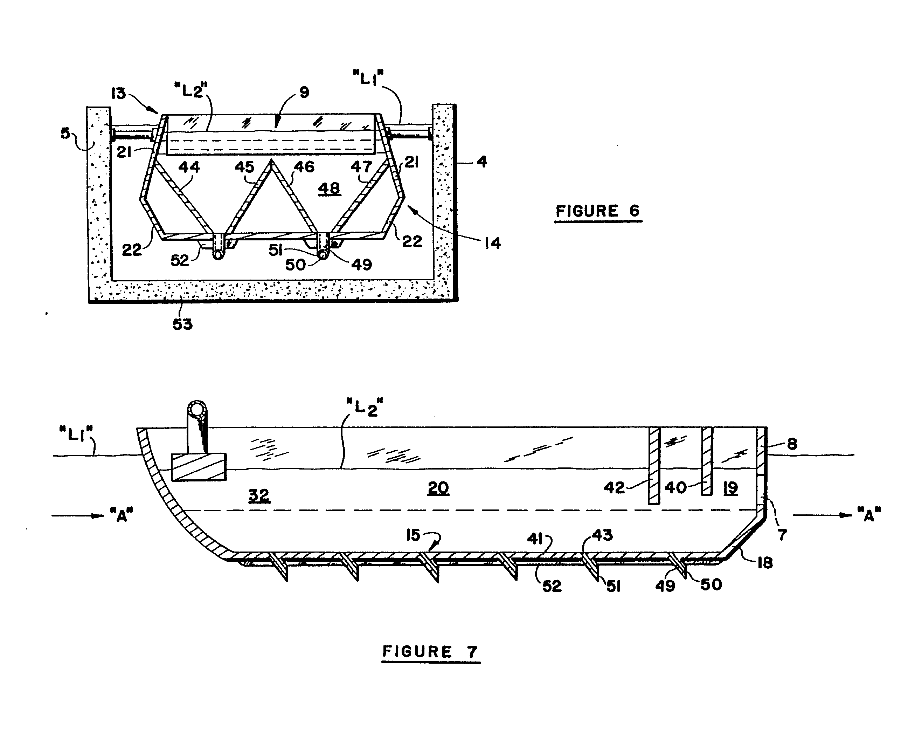

In an alternative embodiment as shown in Figures 5 to 7, a modified baffling configuration is disclosed. A rear baffle 40 is attached between side walls 13 and 14 and extends downward toward the clarifier bottom 41. It is also preferred that a second rear baffle 42 be positioned between rear baffle 40 and launder 9 to help reduce turbulence in clarifier 6. Second rear baffle 42 preferably extends only partially between side walls 13 and 14 and like rear baffle 40 extends downward toward bottom 41. Clarifier bottom 41 is provided with parallel rows of openings 43 extending the length of clarifier 6. Sloped rectangular panels 44, 45, 46 and 47 are attached to side walls 13 and 14 and bottom 41 to form troughs 48 that direct the settling waste toward ports 43.

In order to further reduce turbulence in the clarifier chambers resulting from bubbling air in the waste water through ports 43, it is preferred that directional tubes or pipe stems 49 extend downward from bottom ports 43 at an angle so that pipe openings 50 face away from the flow of the waste water stream. In a more preferred embodiment, pipe opening face 51 is perpendicular to clarifier bottom 41.

In another embodiment, keel members 52 are positioned on either side of pipe stems 49 not only to support the pipe stems but also to guide the waste water stream around pipe stems 49. In this embodiment, the waste water entering through opening 7 flows toward bow portion 16. As in the first embodiment, this flow is at substantially reduced velocity so solids suspended in the waste water settle toward port 43 and are removed through pipe openings 50. This results in a clarified chamber 32. This clarified phase is allowed to enter effluent launder 9 where it is removed by return conduit 10 and is discharged back into the water stream 1. It has been found that by using the clarifier configuration claimed turbulence of the waste water flowing past clarifier 6 and turbulence of the waste water in clarifier chambers 19 and 20 have been minimized resulting in more rapid and efficient removal of solids from the waste water.

Present day clarifier and settling ponds are designed to achieve a clarified water discharge stream containing less than 20 ppm of suspended solids. To achieve this discharge rate, clarifier 6 is placed in channel 3 and an equilibrium state is reached. At this point, the forward ports 43 near launder 9 can be plugged or restricted and the clear water removal rate can be increased. This method allows slower water movement in clarifier 6 and, therefore a greater clear water zone. This balancing, by further restricting the openings in those sections on which the sludge blanket has been removed, allows for greater removal from launder 9 and, therefore, increased capacity.

## Claims

1. A process for clarifying a waste water stream comprising circuitously flowing the waste water stream in a waste water channel (3) having an elongate clarifier positioned therein with its front section (11) heading into the flow of the stream, diverting a portion of the stream through an inlet into the clarifier, causing said portion to flow at a rate and distance sufficient to separate said portion into a clarified phase and a sludge phase, removing the sludge phase from the clarifier through ports in the bottom of the clarifier and removing the clarified phase from the clarifier, characterised by diverting said stream portion into the clarifier in a countercurrent direction to the flow of the waste water stream in the waste water channels positioning the clarifier to decrease th cross-sectional area of the waste water stream in the waste water channel (3) at the location of the clarifier, and controlling the amount of said portion diverted into the clarifier by varying the total cross-section area of said ports.

2. A process according to Claim 1, wherein the clarifier has a bow portion (16) which is faced into the waste water stream and a stern portion (8, 18) provided with an inlet (7) for receiving said stream portion.

3. Apparatus for use in clarifying a waste water stream comprising a continuous waste water channel (3) for the stream and an elongate clarifier positioned in said channel with its front section (11) heading into the flow of the stream, the clarifier having an inlet (7) for receiving water from the channel so that the stream portion separates in the clarifier into a clarified phase and a sludge phase, ports (23, 43) in the bottom of the clarifier for removing the sludge phase, and a launder (9) for removing the clarified phase, characterised by said inlet (7) being located in a rearward part of the clarifier so that liquid flow in the clarifier is countercurrent to that in the waste water channel, by the clarifier being located to decrease the cross-sectional area of the waste water channel, and in that the total cross-sectional area of the ports is variable for controlling the amount of water entering the clarifier through the inlet.

4 Apparatus according to Claim 3, wherein the clarifier has a stern portion opposite to the front section and the inlet (7) is in the stern portion.

5. Apparatus according to Claim 3 or 4 including angularly upwardly extending baffle members (23, 44) separated by said ports (23, 43) in the bottom of the clarifier.

6. Apparatus according to Claim 3, 4 or 5, wherein the front section has an arcuately-shaped forward upright wall (16), which is sloped inwardly from its top towards its bottom and is provided with a bulb-shaped protrusion (17) positioned at the bottom of the wall.

7. Apparatus according to any one of Claims 3 to 6, wherein longitudinally extending rows of bottom ports (43) are provided and hollow directional tubes (49) connect with the bottom ports (43) and are angularly inclined downwardly from the bottom (15) of the clarifier facing towards the rear section (12) of the clarifier.

8. Apparatus according to Claim 7, wherein downwardly protruding ends (51) of the tubes (49) are perpendicular to the bottom (15) of the clarifier.

9. Apparatus according to Claim 7 or 8, wherein parallel keel members (52) are attached to and extend longitudinally of the bottom (15) of the clarifier on opposite sides of each row of ports (43).

**Patentansprüche**

1. Verfahren zum Klären eines Abwasserstromes, bei welchem der Abwasserstrom in einem Abwasserkanal (3) im Kreislauf geführt ist, und ein langgestrecktes Klärbecken mit seinem Vorderabschnitt (11) voran in den Strom eingebracht ist, wobei ein Teil des Stromes durch einen Einlaß in das Klärbecken gelangt, und dieser Teil mit einer bestimmten Geschwindigkeit über eine bestimmte Länge geführt ist, welche ausreicht, um diesen teil in eine geklärte Phase und eine Schlammphase zu überführen, wobei die Schlammphase durch Auslässe im Boden des Klärbeckens abgeführt und die geklärte Phase aus dem Klärbecken entfernt wird, dadurch gekennzeichnet, daß der, in das Klärbecken geleitete Teil des Abwasserstromes in entgegengesetzter Richtung zum Abwasserstrom im Abwasserkanal fließt, in welchem das Klärbecken derart angeordnet ist, daß die Querschnittsfläche des Abwasserstromes im Abwasserkanal (3) in Höhe des Klärbeckens verringert ist, wobei die, in das Klärbecken geleitete Abwassermenge durch Veränderungen der Querschnittsfläche der Auslässe gesteuert ist.

2. Verfahren nach Anspruch 1, dadurch gekennzeichnet, daß das Klärbecken einen, in den Abwasserstrom hineinragenden Bugabschnitt (16) und einen Heckabschnitt (8, 18) aufweist, welcher mit einem Einlaß (7) für den Abwasserteil versehen ist.

3. Vorrichtung zum Klären eines abwasserstromes, bei welchem der Abwasserstrom in einem Abwasserkanal (3) im Kreislauf geführt ist, und ein langgestrecktes Klärbecken mit seinem Vorderabschnitt (11) voran in den Strom eingebracht ist, wobei ein Teil des Stromes durch einen Einlaß (7) in das Klärbecken gelangt, wo dieser Teil in eine geklärte Phase und eine Schlammphase überführt wird, wobei die Schlammphase durch Auslässe (23, 43) im Boden des Klärbeckens abgeführt und die geklärte Phase durch ein Gerinne (9) entfernt wird, dadurch gekennzeichnet, daß der Einlaß (7) im hinteren Teil des Klärbeckens angeordnet ist, so daß die Strömung innerhalb des Beckens der, des Abwasserkanals entgegengesetzt ist, und das Klärbecken derart im abwasserkanal angeordnet ist, daß sich dessen Querschnittsfläche verringert und daß die Gesamtquerschnittsfläche der Auslässe veränderbar ist, so daß die durch die Einlässe in das Klärbekken gelangende Wassermenge regelbar ist.

4. Vorrichtung nach Anspruch 3, dadurch gekennzeichnet, daß das Klärbacken einen, dem vorderen Abschnitt gegenüberliegenden Heckabschnitt aufweist, und der Einlaß (7) im Heckabschnitt vorgesehen ist.

5. Vorrichtung nach Anspruch 3 oder 4, gekennzeichnet durch winklig nach oben geführte Leitwände (23, 44), die durch die Auslässe (23, 43) im Boden des Klärbeckens getrennt sind.

6. Vorrichtung nach Anspruch 3, 4 oder 5, dadurch gekennzeichnet, daß der Vorderabschnitt eine vorwärtsgewölbte, aufrechte Wand (16) aufweist, welche von oben nach unten schräg einwärts abfällt, und welche an ihrem unteren Ende einen wulstförmigen Vorsprung (17) aufweist.

7. Vorrichtung nach einem der Ansprüche 3—6, dadurch gekennzeichnet, daß längsverlaufende Reihen von Auslässen (43) im Boden vorgesehen sind, die jeweils mit Rohrabschnitten (49) verbunden sind, welche vom Boden (15) des Klärbeckens abwärts in Richtung auf den hinteren Abschnitt (12) geführt sind.

8. Vorrichtung nach Anspruch 7, dadurch gekennzeichnet, daß die vortstehenden Enden (51) der Rohre (49) senkrecht zum Boden (15) des Klärbeckens stehen.

9. Vorrichtung nach Anspruch 7 oder 8, dadurch gekennzeichnet, daß am Boden (15) des Klärbeckens auf dem einandergegenüberliegenden Seiten der Auslaßreihen (43) längsverlaufende, parallele Kielteile (52) vorgesehen sind.

**Revendications**

1. Procédé de clarification d'un cournat d'eau résiduaire comprenant le fait de faire écouler en circuit le courant d'eau résiduaire dans un chenal (3) d'eau résiduaire ayant un clarificateur de forme allongée positionné dans ce chenal avec sa section frontale (11) faisant face au courant, le fait de détourner une fraction du courant à travers un orifice d'entrée dans le clarificateur, de faire écouler cette fraction à un débit et sur une distance suffisant pour séparer ladite fraction en une phase clarifiée et une phase boueuse, à extraire la phase boueuse du clarificateur à travers des orifices dans le fond du clarificateur et à extraire la phase clarifiée hors du clarificateur, caractérisé par le fait de détourner ladite fraction du courant pour la faire entrer dans le clarificateur dans une direction à contre-courant de l'écoulement du courant d'eau résiduaire dans le chenal d'eau résiduaire, de positionner le clarifacteur pour diminuer la surface transversale du courant d'eau résiduaire dans le chenal d'eau résiduaire (3) à l'emplacement du clarificateur et de régler la quantité de ladite fraction dètournée pour passer dans le clarificateur en faisant varier la surface transversale totale desdits orifices.

2. Procédé selon la revendication 1, dans lequel le clarificateur a une section de proue (16) faisant face au courant d'eau résiduaire et une section de poupe (8, 18) munie d'un orifice d'entrée (7) pour recevoir ladite fraction du courant.

3. Appareil à utiliser dans la clarification d'un courant d'eau résiduaire, comprenant un chenal continu (3) pour le courant d'eau résiduaire et un clarificateur de forme allongée positionné dans ledit chenal avec sa section frontale (11) faisant face au courant, le clarificateur ayant un orifice-d'entrée (7) pour recevoir de l'eau du chenal de telle sorte que la fraction du courant se sépare dans le clarificateur en une phase clarifiée et en une phase boueuse, des orifices (23, 43) dans le fond du clarificateur pour évacuer la phase boueuse et un déversoir (9) pour èvacuer la phase clarifiée, caractérisé en ce que ledit orifice d'entrée (7) est situé dans une partie postérieure du clarificateur de telle sorte que l'ècoulement de liquide dans le clarificateur soit à contre-courant de celui dans le chenal d'eau résiduaire, en ce que le clarificateur est disposé pour diminuer la surface de section transversale du chenal d'eau résiduaire, et en ce que la surface totale de section transversale des orifices est variable pour régler la quantité d'eau entrant dans le clarificateur par l'orifice d'entrée.

4. Appareil selon la revendication 3, dans lequel le clarificateur a une partie de poupe à l'opposé de la section frontale, et l'orifice d'entrée (7) est dans la partie de poupe.

5. Appareil selon la revendication 3 ou 4 comprenant des éléments déflecteurs (23, 44) s'étendant obliquement vers le haut, séparés par lesdits orifices (23, 43) dans le fond du clarificateur.

6. Appareil selon la revendication 3, 4 ou 5, dans lequel la section frontale a une paroi antérieure montante (16) en forme d'arche qui est inclinée vers l'intérieur à partie de son sommet vers son fond et est pourvue d'une protubérance (17) en forme de bulbe située au bas de la paroi.

7. Appareil selon l'une quelconque des revendications 3 à 6, dans lequel sont prévues, s'étendant longitudinalement, des rangées d'orifices de fond (43) et des tubes creux directionnels (49) se relient aux orifices de fond (43) et sont inclinés obliquement vers le bas à partir du fond (15) du clarificateur en faisant face vers la section postérieure (12) du clarificateur.

8. Appareil selon la revendication 7, dans lequel les extrémités (51) des tubes (49) faisant saillie vers le bas sont perpendiculaires au fond (15) du clarificateur.

9. Appareil selon la revendication 7 ou 8 dans lequel des éléments de quille parallèles (52) sont attachés au fond (15) du clarificateur et s'étendent longitudinalement à lui de part et d'autre de chaque rangée d'orifices (43).

FIGURE 1

FIGURE 2

1

FIGURE 3

FIGURE 4

FIGURE 5

FIGURE 6

FIGURE 7

0 111 035